# EUROPEAN PATENT APPLICATION

(11) **EP 2 949 423 A2**
(43) Date of publication of application: **02.12.2015**
(21) Application number: 15169395.9
(22) Date of filing: 27.05.2015
(51) Int. Cl.: B23Q 15/12, B23Q 17/09, G05B 19/404, B23B 7/02, B23B 13/02, B23B 13/08

(54) **MACHINE TOOL WITH OSCILLATION SENSOR AND WORKPIECE PROCESSING METHOD**

(30) Priority: 30.05.2014 JP 2014113039
(71) Applicant: Nakamura-Tome Precision Industry Co., Ltd., Hakusan-shi, Ishikawa (JP)
(72) Inventor: NISHIMURA, Naotsugu, Hakusan-shi, Ishikawa (JP); INOUE, Hiroki, Hakusan-shi, Ishikawa (JP)
(74) Representative: Isarpatent

(57) **Abstract**

In a machine tool provided with an auxiliary equipment such as a bar feeder (2) and a processed workpiece discharge device (3) in which oscillation is induced by rotation of a main shaft (11) of an NC machine tool, the invention prevents the oscillation in the work during the processing, the machine tool main body and the auxiliary equipment so as to prevent an adverse effect caused by the mechanical oscillation such as generation of noise during the processing and reduction of a machine service life. An oscillation sensor (6) is attached to the auxiliary equipment, and the oscillation of the auxiliary equipment during operation is output to the NC device in the machine tool main body side. In the case that the oscillation reaches an oscillation allowable upper limit value of which is set in the NC device, speed or rotation of the main shaft designated by a processing program is decreased. In the case that the oscillation does not become small even then, the machine is stopped as an alarm. In the case that the oscillation becomes larger due to resonance, the oscillation is prevented by increasing the speed of rotation of the main shaft.

## Description

### BACKGROUND OF THE INVENTION

### Field of the Invention

The invention relates to an auxiliary equipment, particularly relates to an NC machine tool with an auxiliary equipment in which oscillation is induced by rotation of a main shaft in a machine tool main body, and relates to a technique of preventing a processing precision of the workpiece and a service life of the machine from being adversely affected by the oscillation of the machine during the workpiece processing.

### Description of the Related Art

A main shaft speed (a rotational speed of a workpiece main shaft and a tool main shaft) in the NC machine tool is designated by a processing program. If the machine or the workpiece oscillates during the processing of the work, the processing precision is lowered and the machine service life and a working environment is adversely affected. Accordingly, a programmer designates the main shaft speed as a speed at which the oscillation is not generated in the machine and the workpiece according to the processing program.

It is hard to previously predict generation of the oscillation. An operator previously carries out a test processing when the operator continuously processes on the basis of the processing program. The operator determines on the basis of a noise of the machine during the test processing and a processing precision of the test processed workpiece whether or not the main shaft speed is proper, and in the case that the operator determines that it is necessary to correct the main shaft speed, the operator starts the continuous processing after correcting.

A conflicting relationship exists between increasing the main shaft speed for improving a productivity and decreasing the main shaft speed for securely preventing generation of the oscillation. In order to designate an optimum main shaft speed, it is necessary to carry out the test processing several times, thereby incurring waste in time and material. Further, the oscillation may be generated by a secular change and a thermal deformation of the machine. In the case that the oscillation is generated after starting the continuous processing, a lot of defective products are generated. Further, a mechanical trouble is caused, and the working environment is deteriorated by the noise. Further, it is necessary to deal with the oscillation by manually decreasing the main shaft speed when the oscillation is generated, and the operator can not carry out the other work in a state in which the operator is away from the machine.

It has been conventionally carried out to attach an oscillation sensor to the machine tool main body so as to detect the oscillation of the machine. The machine tool main body is provided with a high rigidity for allowing a high processing precision and a heavy cutting. Therefore, in order to detect the oscillation of the machine tool main body, the oscillation sensor having a high precision is necessary.

In a machine tool having a bar feeder which automatically feeds a bar member to the machine tool main body, the oscillation may be generated or may not be generated according to a length of the bar member left within the bar feeder. In the case that the main shaft speed is designated by the processing program in correspondence to the length of the bar member within the bar feeder, the processing program becomes very complicated, and the length of the bar member which is fed to the bar feeder may be differentiated. Accordingly, this designation is not actual.

### SUMMARY OF THE INVENTION

### Problem to be Solved by the Invention

A machine tool continuously processing a lot of workpieces is provided with auxiliary equipments such as a workpiece feed device and a workpiece discharge device. Many of the auxiliary equipments are provided with members each of which rotates in connection with rotation of a main shaft of the machine tool main body, or are connected to the machine tool main body by a workpiece under processed. As a result, the oscillation is induced in connection with the rotation of the main shaft or the workpiece.

An object of the invention is to provide a technical means which prevents reduction of a processing precision and reduction of a machine service life due to oscillation of a machine and a workpiece, in a machine tool having an auxiliary equipment in which the oscillation is induced by rotation of a main shaft in a machine tool main body.

### Means for Solving the Problem

The invention achieves the object mentioned above by comparing a detection signal of an oscillation sensor 6 attached to auxiliary equipments 2 and 3 which are provided in a machine tool main body 1 with a threshold value, changing a main shaft speed which is designated by a processing program 41 in the case that the detection signal goes beyond the threshold value, and preventing oscillation of a workpiece w, the machine tool main body 1 and the auxiliary equipments 2 and 3 under processed.

The oscillation sensor 6 is attached to the auxiliary equipments 2 and 3, and the detection signal of the oscillation sensor 6 under operation is output to an NC device 4 in the machine tool main body side. In the case that the detected oscillation reaches an allowable upper limit value of the oscillation which is set in the NC device 4, the speed of rotation of the main shaft 11 is decreased. In the case that the detected oscillation does not become still small, the machine is stopped as an alarm. The detected oscillation may become even larger due to resonance in the case that the speed of rotation of the main shaft 11 is decreased, however, in this case, the oscillation can be prevented by increasing the speed of rotation of the main shaft 11.

In place of full-time monitoring of the oscillation during the continuous processing, it is possible to control so as to measure an oscillation property of each of the workpieces by the test processing and change the speed of rotation of the main shaft 11 at a position where the oscillation becomes larger. In this case, the operator can manually set the position where the oscillation becomes larger and the main shaft speed at the position.

Further, in the case that the oscillation which is hard to be prevented by the resonance is generated, it is possible to employ a process of changing the length of the raw material by a cutting-off process for avoiding the position where the oscillation becomes larger.

A workpiece machining method of a machine tool according to the invention is characterized by attaching an oscillation sensor 6 to an auxiliary equipment 2 or 3 having a member 31 which rotates in connection with rotation of a main shaft 11 of an NC machine tool or a member 21 which supports a workpiece w rotating in connection with the rotation of the main shaft 11, and changing a command value of a speed of rotation of the main shaft 11 in the machine tool by an NC device 4 in a machine tool side, on the basis of a measurement value of the oscillation sensor 6 which changes in connection with progress of the processing when processing the workpiece by the NC machine tool.

The machine tool according to the invention is provided with a machine tool main body 1, an NC device 4 which controls speed of rotation of a main shaft 11 of the machine tool main body, auxiliary equipments 2 and 3 which are provided in the machine tool main body 1, and an oscillation sensor 6 which is attached to the auxiliary equipments, and the NC device 4 is provided with a main shaft speed changing means 43 which changes the speed of rotation of the main shaft 11 of the machine tool main body commanded by a processing program 41 in response to a detection value of the oscillation sensor 6.

The invention is more effective in the case that the auxiliary equipment is a feed device of the workpiece to the machine tool main body 1, particularly a bar feeder 2 which feeds a bar member w, or the case that the auxiliary equipment is a discharge device 3 of a processed workpiece. The feed device 2 and the discharge device 3 of the workpiece w are provided in the machine tool main body 1 which carries out a continuous processing of the workpiece. Since the auxiliary equipments are not provided with such a rigidity as that of the machine tool main body although the machine tool main body is provided with a high rigidity, an amplitude when the oscillation is generated becomes greater than that of the machine tool main body side. It is possible to more easily detect the generation of the oscillation and the strength of the oscillation by the provision of the oscillation sensor 6 in the auxiliary equipments side.

### Effect of the Invention

It is possible to reduce the defective products in processing at the continuous workpiece processing and prevent malfunction of the machine by attaching the oscillation sensor to the auxiliary equipments of the machine tool and detecting the oscillation level so as to change the main shaft speed of the machine tool. Since the auxiliary equipments tend to oscillate in comparison with the machine tool main body, it is possible to easily and quickly detect the oscillation during the processing.

Even in the case that the main shaft speed is set to be somewhat higher by the processing program, the oscillation generated thereby can be prevented, so that the productivity is improved. Further, since the oscillation is prevented by automatically changing the main shaft speed, it is not necessary for an operator to always monitor the machine, and it is possible to lighten a work burden. Further, since it is possible to flexibly correspond to change of the length of the raw material, and noise is reduced, the working environment is improved.

### Brief Description of the Drawings

Fig. 1 is a block diagram of a first embodiment;
Fig. 2 is a flow chart showing a changing procedure of a main shaft speed;
Fig. 3 is a graph showing an example of an aspect of a length of a raw material and an oscillation;
Fig. 4 is a block diagram of a substantial part of a second embodiment; and
Fig. 5 is a block diagram of a substantial part of a third embodiment.

### Mode for Carrying Out the Invention

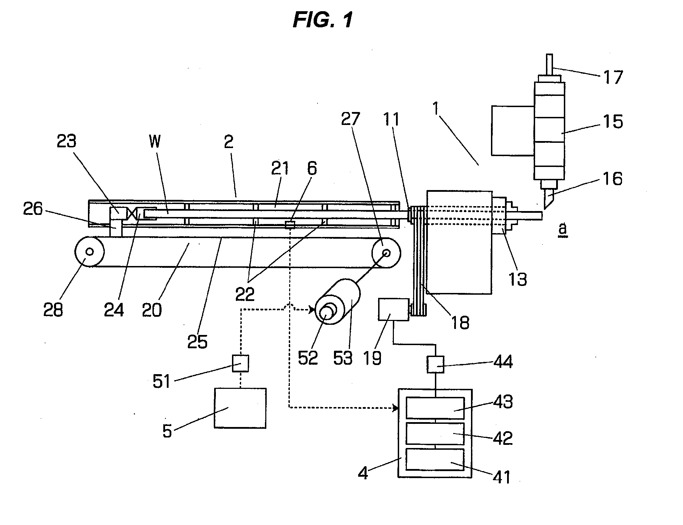

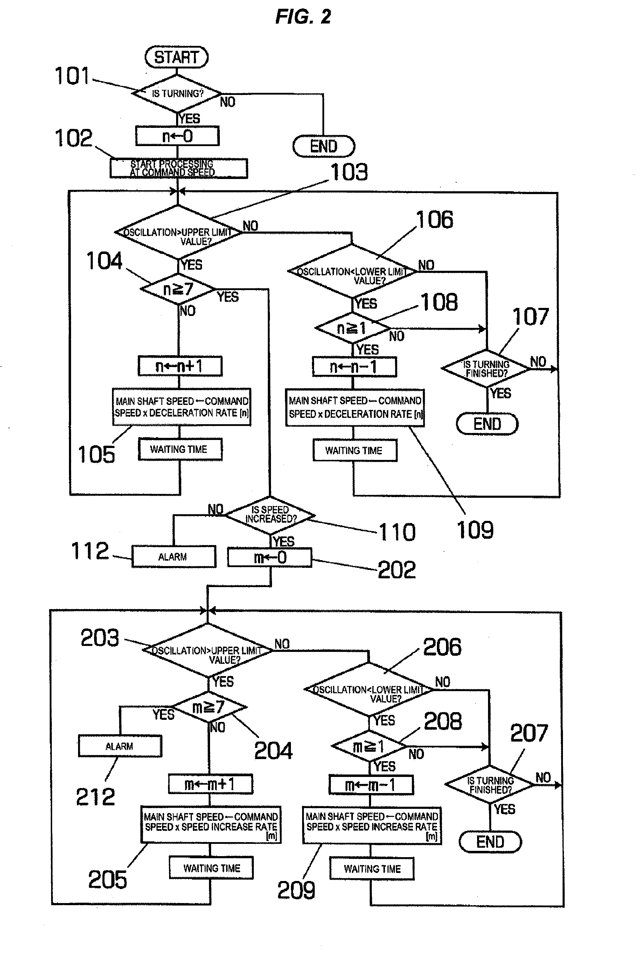

A description will be given below of embodiments according to the invention with reference to the accompanying drawings. A bar feeder which feeds a bar member to a processing area through a hollow hole of a main shaft in a lathe turning machine is widely utilized for processing a comparatively compact workpiece, as an auxiliary equipment which feeds the workpiece to the lathe turning machine. Figs. 1 and 2 are views showing a first embodiment of the invention in the case that a bar feeder 2 is provided as the auxiliary equipment in an NC lathe turning machine 1.

As shown in Fig. 1, the bar feeder 2 is provided with an elongated guide pipe 21. The guide pipe 21 is installed on an extension of a main shaft 11 which is provided with a hollow hole. A chuck 13 is attached to a leading end of the main shaft 11, the chuck 13 gripping a leading end portion of a bar member w which is fed through the hollow hole of the main shaft. A pusher 23 is provided in a rear end (an opposite side to the main shaft) of the guide pipe 21 so as to be movable in an axial direction within the guide pipe 21. A bar feed device 20 such as a chain 25 wound between sprockets 27 and 28 or a ball screw is provided in parallel to the guide pipe 21. The pusher 23 and the bar feed device 20 are connected by a plate-like bracket 26 which passes through a slit (an expanding slot) in an axial direction provided in the guide pipe 21. A push head 24 is installed to a leading end (an end portion close to the main shaft) of the pusher 23 so as to be freely rotatable around a center axis of the guide pipe.

A feed motor 53 provided in the bar feeder is connected to a drive side sprocket 27 via a reduction gear (not shown) by a servo motor. Speed of rotation of the feed motor 53 is detected by an encoder 52, and is fed back to a servo amplifier 51. The feed motor 53 is rotationally driven on the basis of a command of the bar feeder side NC device 5 via the servo amplifier 51. The lathe turning machine side NC device 4 sends a processing end signal to the bar feeder side NC device 5 as often as one workpiece process is finished. The bar feeder side NC device 5 receiving the process end signal sends back a feed end signal after feeding the bar member w at a length which is necessary for processing the next workpiece by the pusher 23.

The guide pipe 21 can be opened its upper half portion, and is structured such that the bar member w is thrown into the guide pipe by opening the upper half portion and the upper half portion is closed. Further, the chain 25 is driven by rotating the feed motor 53 in a state in which the chuck 13 is opened, and the pusher 23 is fed to the main shaft 11 side. The leading end of the bar member w pushed by the pusher 23 is fed to the processing area of the lathe turning machine through the hollow hole of the main shaft 11. When the bar member w is fed at a predetermined length, the bar member is gripped by closing the chuck 13, and the leading end of the bar member w is processed by a tool 16 which is installed to a tool post 15 of the lathe turning machine by rotating the main shaft 11. At this time, the push head 24 rotates according to the rotation of the bar member w. When the processing of the leading end of the bar member w is finished, the processed portion is cut off by a cutting-off turning tool 17. Further, the chuck 13 is opened, the leading end portion of the bar member is fed to the processing area a by the pusher 23, and the next workpiece is processed. The compact workpiece can be continuously processed by repeating the above operations.

The main shaft 11 is driven by a main shaft motor 19 via a belt transmission device 18. Speed of rotation of the main shaft motor 19 is designated by a code (a block) of a processing program 41 which is installed in the lathe turning machine side NC device 4. A rotation command of the main shaft motor 19 is given to the main shaft motor 19 via a code analyzing means 42, a main shaft speed changing means 43 and a servo amplifier 44.

An oscillation sensor (an acceleration sensor) 6 is attached to the guide pipe 21 of the bar feeder 2. A detection signal of the oscillation sensor 6 is given to a main shaft speed changing means 43 which is provided in the lathe turning machine side NC device 4. An upper limit value and a lower limit value of an allowable oscillation are set in the main shaft speed changing means 43. The main shaft speed changing means 43 changes the command value of the main shaft speed on the basis of these set values, an analyzing information of a code analyzing means 42, and the detection signal of the oscillation sensor 6.

Fig. 2 is a flow chart showing an example of a preferable control procedure of the main shaft speed changing means 43. The control procedure shown in Fig. 2 includes a control which turns back to the original speed of rotation when the oscillation is lowered after the speed reduction of the main shaft due to the oscillation, and a control trying to prevent the oscillation by increasing speed while taking into generation of the oscillation due to resonance. In order to achieve the control mentioned above, the main shaft speed changing means 43 registers a lower limit value of the oscillation in addition to an upper limit value of the allowable oscillation, a speed reducing rate [n] and a speed increasing rate [m] of the main shaft speed in a plurality of stages (seven stages in Fig. 2), and binary signals whether or not the speed increase is tried in the case that the oscillation does not become equal to or less than the upper limit value even by reducing the speed. The greater the values n and m (= 1 to 7) are, the greater the speed decreasing rate and the speed increasing rate are.

In Fig. 2, the step discriminates whether or not the code of the processing program is the turning (a step 101), and finishes the procedure if the code is not the turning. If the code is turning, the step sets n to 0 and starts turning (a step 102). During the turning, the step always monitors the detection signal of the oscillation sensor 6 (a step 103), and increases n by one and multiplies the command speed designated by the processing program by the speed decreasing rate [n] which is registered in correspondence to the value n so as to output to the servo amplifier 44 in the case that the oscillation goes beyond the upper limit value (a step 105). Further, the step goes back to the step 103 after waiting for a time for which the main shaft speed comes to the changed speed of rotation, and determines whether or not the oscillation after the change of the main shaft rotation is equal to or less than the upper limit value. If the oscillation is equal to or less than the upper limit value by the determination of the step 103, the loop of the step 103 → 106 → 107 is repeated. In the case that the oscillation is increased and goes beyond the upper limit value before the end of the turning process, the deceleration of the main shaft speed by the loop of the step 103 → 104 → 105 is again carried out.

On the other hand, in the case that the oscillation is lowered during the turning after the deceleration and becomes equal to or less than the lower limit value, the step branches off into the step 106 → 108. In the step 108, a degree of the deceleration is reduced by lowering n one by one under the condition that the n is equal to or more than 1, that is, the main shaft speed is decelerated (the main shaft speed is returned to the original step by step) (a step 109). Further, in the case that the oscillation becomes equal to or more than the lower limit value (the step 106) or comes to the set speed of rotation (the step 108), the loop of the step 103 → 106 → 107 is repeated.

On the basis of the control mentioned above, the turning is carried out at the main shaft speed by which the oscillation is between the upper limit value and the lower limit value under the condition that the command speed is the upper limit. In the case that the oscillation does not level off even by lowering the main shaft speed to the lowest rate of deceleration at the seventh stage and the speed is not set to try the speed increase, the step proceeds to the step 103 → 104 → 110 → 112 and generates an alarm.

In the case of the setting to try the speed increase, the step searches whether or not the oscillation is attenuated while speed increasing the main shaft speed step by step. In other words, the oscillation is monitored in a step 203 by setting m to 0. Since the step proceeds to the step 203 via the determination in the steps 103 and 104, the determination in the step 203 is first YES and m = 1 is established, so that the command speed is increased at one stage in a step 205. Further, the speed is increased step by step until the oscillation becomes equal to or less than the upper limit value by the loop of the step 203 to 205, and in the case that the oscillation becomes equal to or less than the upper limit value, the loop of the step 203 → 206 → 207 is repeated. In the case that the oscillation does not fall below the upper limit value even under the maximum speed increase rate, an alarm in a step 212 is generated.

In the case that the oscillation increases and goes beyond the upper limit value before the end of the turning process after temporarily entering into the loop of the step 203 → 206 → 207, the speed increase of the main shaft speed by the loop of the step 203 → 204 → 205 is again carried out. Further, in the case that the oscillation lowers and becomes equal to or less than the lower limit value, the step branches off into the step 206 → 208. In the step 208, the level of the speed increase is reduced (the main shaft speed is returned to the original step by step) by decreasing m one by one under the condition of the speed increase of the main shaft speed (a step 209). Further, in the case that the oscillation becomes equal to or more than the lower limit value (the step 206) or becomes the set speed of rotation (the step 208), the turning process is carried on by the loop of the step 203 → 206 → 207.

On the basis of the control mentioned above, the turning process is carried out at the main shaft speed by which the oscillation is between the upper limit value and the lower limit value under the condition that the lower limit of the main shaft speed is the command speed.

As mentioned above, according to the invention, the oscillation of the bar feeder corresponding to the auxiliary equipment is always monitored, and the continuous processing of the workpiece is carried out by automatically changing the main shaft speed so that the oscillation becomes equal to or less than the upper limit value when the oscillation goes beyond the upper limit value which is set as the oscillation which is concerned about the reduction of the processing precision of the workpiece and the adverse effect of the machine service life.

In the bar feeder, the oscillation is generated by the oscillation of the workpiece gripped its leading end by the chuck 13 within the guide pipe 21. A length of a bar member (in other words, a position of a pusher) within the guide pipe 21 becomes shorter little by little in connection with the progress of the processing, and an oscillation mode is changed. The bar member within the guide pipe 21 is retained its outer periphery rotatably by oscillation stops 22 which are provided in the guide pipe 21 at predetermined intervals. As a result, the oscillation of the bar feeder 2 is changed by the main shaft speed, the length of the bar member and the protruding amount of the rear end of the bar member from the oscillation stops 22.

Therefore, it is possible to employ a control which prevents the oscillation from going beyond the upper limit value, by measuring a relationship between the position of the pusher 23 (the position of the rear end of the bar member) and a detection value of an oscillation sensor attached to the bar feeder at the test processing time, determining the main shaft speed at which the oscillation does not go beyond the upper limit value at a position where the oscillation goes beyond the upper limit value (the position of the pusher 23) so as to register the main shaft speed to a main shaft speed changing means 43, and changing the main shaft speed to the registered main shaft speed when the pusher comes to the position.

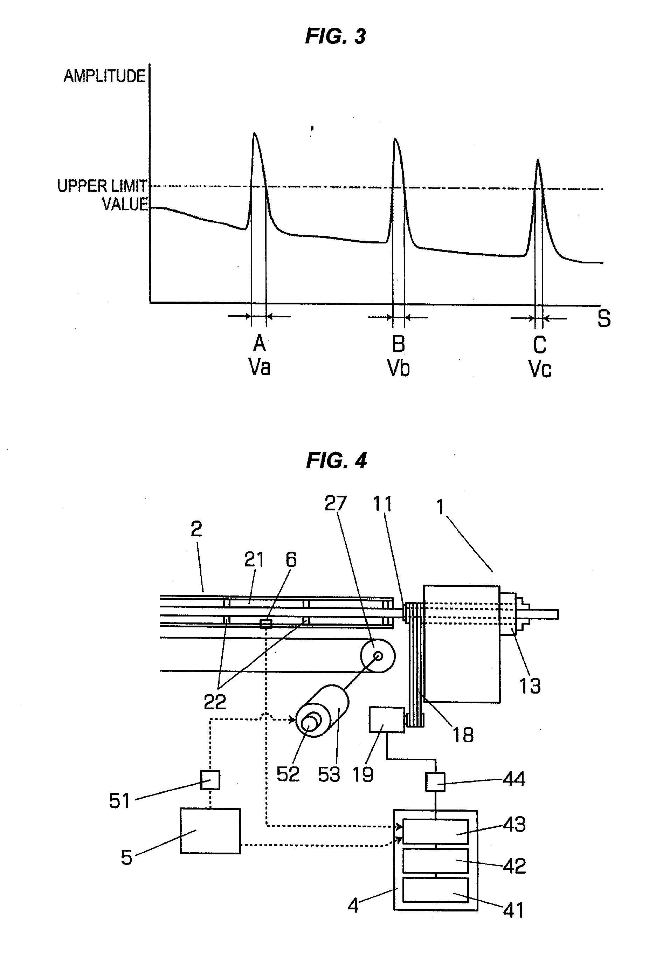

In other words, as shown in Fig. 3, in the test processing, the step measures the position s of the pusher 23 and the detection value of the oscillation sensor 6 attached to the bar feeder, and determines the main shaft speeds Va, Vb and Vc at which the oscillation at the positions A, B and C where the oscillation goes beyond the upper limit value becomes equal to or less than the upper limit value so as to register the main shaft speeds Va, Vb and Vc in the lathe turning machine side NC device 4. Further, at the continuous processing time, as shown in Fig. 4, the lathe turning machine side NC device 4 receives a position signal of the pusher 23 from the bar feeder side NC device 5, and controls so as to rotate the main shaft at the main shaft speeds Va, Vb and Vc registered at the positions when the position of the pusher 23 comes to the positions A, B and C. According to the control, the oscillation sensor may be attached only at the test processing time. In the graph in Fig. 3, the positions where the oscillation rapidly changes are positions where the rear end of the bar member passes through the oscillation stops 22.

The bar feeder 2 is an example of the auxiliary equipment which is connected to the machine tool main body 1 via the bar member w corresponding to the workpiece. As an example of the auxiliary equipment provided with the member which rotates in connection with the main shaft rotation of the machine tool, there is a workpiece discharge device 3 which discharges the processed workpiece by a rod passed through a hollow hole of the main shaft.

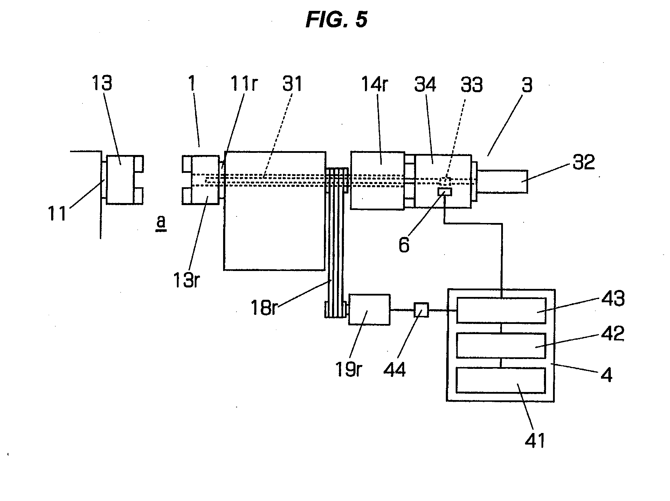

Fig. 5 shows a workpiece discharge device which is provided in a right main shaft side of a two main shaft opposed lathe turning machine. In Fig. 5, a right main shaft 11 r which is axially supported to a right head stock is rotationally driven by a right main shaft motor 19r via a belt transmission device 18r. A chuck 13r is installed to a leading end of the right main shaft 11 r. A chuck cylinder 14r is installed to an opposite side to the chuck of the right head stock, and a claw of the chuck 13r is opened and closed by the chuck cylinder. The workpiece discharge device 3 is installed to an opposite side to the chuck of the chuck cylinder 14r. The workpiece discharge device 3 is provided with a rod 31 which extends to the chuck 13r side through the main shaft 11r and the hollow hole of the chuck cylinder 14r, and a cylinder 32 which moves the rod forward and backward. When processing the workpiece, a leading end of the rod 31 retracts into the hollow hole of the main shaft 11 r. After the end of the processing of the workpiece, the rod 31 is moved forward into the hollow hole of the chuck 13r by opening the chuck 13r, and the processed workpiece is pushed out of the chuck 13r and is discharged.

A rotary joint 33 is interposed between the rod 31 and the cylinder 32 in the workpiece discharge device having the structure mentioned above, and the rod 31 rotates together with the rotation of the right main shaft 11 r when the right main shaft rotates. Since the rod 31 is movable in an axial direction to the hollow hole of the main shaft, and is supported its base end to a housing 34 of the discharge device 3 so as to be movable in the axial direction and be rotatable, centrifugal force trying to oscillate is generated on the basis of the rotation in connection with the rotation of the main shaft, and oscillates the housing 34 of the workpiece discharge device. The oscillation is transmitted to the right head stock so as to cause the reduction of the processing precision in the workpiece and the reduction of the service life of the chuck cylinder and the main shaft bearing.

Even in the workpiece discharge device 3 mentioned above, it is possible to control the main shaft speed so as to prevent the oscillation of the workpiece discharge device 3 from going beyond the set upper limit value, by attaching the oscillation sensor 6 to the housing 34, outputting the detection value thereof to the same main shaft speed changing means as described in Fig. 1 provided in the NC device of the lathe turning machine, and controlling the right main shaft motor 19r.

## Claims

1. A workpiece machining method of a machine tool, **characterized by** attaching an oscillation sensor to an auxiliary equipment having a member which rotates in connection with rotation of a main shaft of an NC machine tool or a member which supports a workpiece w processed by the machine tool, and changing a command value of a main shaft speed which is designated by a processing program of an NC device 4 on the basis of a measurement value of said oscillation sensor which changes in connection with progress of said processing when processing the workpiece by said NC machine tool.

2. A machine tool comprising:
a machine tool main body;
an NC device which controls a main shaft speed of said machine tool main body;
an auxiliary equipment which is provided in said machine tool main body; and
an oscillation sensor which is attached to said auxiliary equipment,
**characterized in that** said NC device is provided with a main shaft speed changing means which changes the main shaft speed of said machine tool main body commanded by a processing program in response to a detection value of said oscillation sensor.

3. The machine tool according to claim 2, **characterized in that** said auxiliary equipment is a workpiece feed device to the machine tool main body.

4. The machine tool according to claim 3, **characterized in that** said workpiece feed device is a bar feeder.

5. The machine tool according to claim 2, **characterized in that** said auxiliary equipment is a workpiece discharge device from the machine tool main body.
